# EUROPÄISCHE PATENTSCHRIFT

(11) **EP 1 961 169 B1**
(45) Veröffentlichungstag und Bekanntmachung des Hinweises auf die Patenterteilung: **17.02.2010**
(21) Anmeldenummer: 06830571.3
(22) Anmeldetag: 13.12.2006
(51) Int. Cl.: H04W 52/02, H04W 76/02

(54) **VERFAHREN ZUM BETREIBEN EINES FUNKNETZWERKS SOWIE TEILNEHMERGERÄT FÜR EIN DERARTIGES NETZWERK**
METHOD FOR OPERATING A RADIO NETWORK AND SUBSCRIBER DEVICE FOR SAID TYPE OF NETWORK
PROCEDE POUR FAIRE FONCTIONNER UN RESEAU DE RADIOCOMMUNICATION ET APPAREIL D'ABONNE POUR UN TEL RESEAU

(30) Priorität: 14.12.2005 DE 102005059800
(43) Veröffentlichungstag der Anmeldung: 27.08.2008
(73) Patentinhaber: SIEMENS AKTIENGESELLSCHAFT, 80333 München (DE)
(72) Erfinder: WEILER, Christoph, 75015 Bretten (DE)
(86) Internationale Anmeldenummer: PCT/EP2006/069634
(87) Internationale Veröffentlichungsnummer: WO 2007/068710

(56) Entgegenhaltungen:
- WO-A-03/015452
- WO-A-03/061175
- WO-A-2006/038163
- US-A1- 2005 093 702

## Beschreibung

Die Erfindung betrifft ein Verfahren zum Betreiben eines Funknetzwerks zur Datenübertragung zwischen mehreren Teilnehmern, insbesondere zwischen Geräten der Prozessinstrumentierung in einer automatisierungstechnischen Anlage, nach dem Oberbegriff des Anspruchs 1 sowie ein Teilnehmergerät nach dem Oberbegriff des Anspruchs 4.

Aus der DE 101 25 387 A1 ist bereits ein Funknetzwerk zur Datenübertragung zwischen mehreren Teilnehmern, die auch als Teilnehmergeräte bezeichnet werden können, bekannt. Das Netzwerk weist mehrere Funkzellen auf, in denen jeweils zumindest eine Basisstation zur drahtlosen Datenübertragung mit in der Funkzelle befindlichen Teilnehmern angeordnet ist. Damit sich die Funksignale in einander benachbarten Funkzellen, die sich zumindest teilweise überlappen, nicht gegenseitig stören, werden in einander überlappenden Funkzellen jeweils verschiedene Kanäle zur drahtlosen Datenübertragung genutzt. Wenn sich ein über Funk angekoppelter Teilnehmer von einer Funkzelle in eine benachbarte bewegt, ist ein Übergabeverfahren, ein so genanntes Handover, von einer Zelle zur anderen erforderlich. Die mobilen Teilnehmer bewerten die Signalqualität und wechseln je nach Ergebnis der Bewertung den Übertragungskanal, um jeweils auf dem Übertragungskanal mit den besten Übertragungseigenschaften die Kommunikation mit einer Basisstation durchzuführen. Zur Minimierung der Verzögerungszeit beim Umschalten eines mobilen Teilnehmers auf einen neuen Kanal werden durch die Basisstationen gleichzeitig Testzyklen abgearbeitet, in welchem durch die Basisstationen Testsignale in die jeweiligen Funkzellen ausgesendet werden, anhand derer über Funk angekoppelte Teilnehmer den Übertragungskanal mit den besten Übertragungseigenschaften ermitteln. Das Verfahren ist für Netzwerke geeignet, die für zeitkritische Anwendungen vorgesehen sind, beispielsweise zur Vernetzung von Sensoren und Aktuatoren als Geräte der Prozessinstrumentierung in einer automatisierungstechnischen Anlage.

In automatisierungstechnischen Anlagen finden zunehmend aütarke Sensoren Anwendung, das heißt Sensoren, die über keinerlei Anschlussdrähte zur Kommunikation oder Energieversorgung verfügen. Sie sind mit besonders geringem Aufwand in der Anlage installierbar. Zur Versorgung mit der erforderlichen Betriebsenergie sind sie mit einer Energiequelle oder einem Energiespeicher versehen. Die zur Verfügung stehende Energiemenge ist dabei häufig begrenzt. Diese wird benötigt zur Erfassung des Sensorwerts, evtl. zur Vorverarbeitung der erfassten Werte und zur Übertragung der erfassten Werte über das Funknetzwerk.

WO 03/061175 A2 beschreibt ein selbsorganisierendes, hierarchisches Funknetzwerk bestehend aus Sensoren, Aktoren und einem sogenannten "Cluster-Head".

Der Erfindung liegt die Aufgabe zugrunde, ein Verfahren zum Betreiben eines Funknetzwerks zur Datenübertragung zwischen mehreren Teilnehmern, insbesondere zwischen Geräten der Prozessinstrumentierung in einer automatisierungstechnischen Anlage, zu finden, sowie ein dafür geeignetes Teilnehmergerät zu schaffen, bei welchen die für die Datenübertragung erforderliche Energiemenge verringert wird.

Zur Lösung dieser Aufgabe weist das neue Verfahren zum Betreiben eines Funknetzwerks die im kennzeichnenden Teil des Anspruchs 1 angegebenen Merkmale auf. In den abhängigen Ansprüchen sind vorteilhafte Weiterbildungen und in Anspruch 4 ein Teilnehmergerät beschrieben.

Die Erfindung hat den Vorteil, dass zu einem Teilnehmer automatisch die Kommunikationspartner ermittelt werden, die bezüglich seiner Anforderungen an die Häufigkeit der Datenübertragung am besten zu ihm passen. Lediglich zwischen dem Teilnehmer und den so ermittelten Kommunikationspartnern wird eine Verbindung aufgebaut. Dadurch wird es ermöglicht, dass der Teilnehmer in Zeiten, zu welchen keine Kommunikation stattfindet, seine Kommunikationsschnittstelle deaktiviert und somit Versorgungsenergie einspart. Auf diese Weise wird bei minimalem Energiebedarf des Teilnehmers die volle Kommunikationsfähigkeit gemäß seinen Anforderungen.erreicht. Damit wird zusätzlich zu einer automatischen Konfiguration mit geeigneten Discovery-Mechanismen eine Minimierung des Energiebedarfs berücksichtigt. Übliche Verfahren zur Konfiguration von Funknetzwerken handeln neben den verwendeten Sicherheitsmechanismen auch die Datenrate aus. Dies wird beispielsweise so gemacht, dass nach der maximalen Datenrate gesucht wird, die von allen beteiligten Kommunikationspartnern beherrscht wird. Die einzustellende Datenrate entspricht der Datenrate des Kommunikationspartners, dessen maximale Datenrate die niedrigste ist. Die Erfindung erlaubt es nun zusätzlich, anhand der Häufigkeit der Datenübertragung, die von einem Teilnehmer gefordert wird, geeignete Kommunikationspartner im Funknetzwerk zu finden. Die Zeiträume der Datenübertragung können dann in Zyklen eingeordnet werden, in welchen sich Pausen, in denen die Kommunikationsschnittstelle der beteiligten Partner abgeschaltet werden kann, mit Zeiträumen der Datenübertragung, in welchen alle beteiligten Partner ihre Kommunikationsschnittstellen aktivieren, abwechseln. Dabei kann berücksichtigt werden, dass Teilnehmer, die Routing-Fähigkeit besitzen, ständig aktiv sein müssen, da stets Daten gesendet werden können, die einer sofortigen Weiterleitung bedürfen.

Beispielsweise in einem strukturierten Funknetzwerk, in welchem mehrere Teilnehmer, beispielsweise drahtlose Sensoren, Verbindungen zu einem Access-Point herstellen, kann mit dem Verfahren der optimal geeignete Access-Point ermittelt werden. Wenn mehrere Access-Points zur Verfügung stehen, so wird eine Verbindung zwischen dem Teilnehmer und dem Access-Point hergestellt, der am besten zu den vom Teilnehmer gestellten Anforderungen passt. Auf diese Weise wird beispielsweise sichergestellt, dass sich ein Sensor nicht unnötig mit einem hochperformanten Access-Point verbindet. Anhand der von einem Teilnehmer empfangenen Anforderungen an die Häufigkeit der Datenübertragung kann andererseits der Access-Point entscheiden, ob er eine Verbindung zu dem jeweiligen Teilnehmer erlaubt oder ablehnt.

Insbesondere in vermaschten Funknetzen hat die Erfindung den Vorteil, dass sich die Teilnehmer, deren zyklische Datenübertragung eine ähnliche Zyklusdauer aufweist, zu einer Masche verbinden können. Dann ist es möglich, die Teilnehmer auf diesen Zyklus zu synchronisieren. Zur Verminderung der Leistungsaufnahme wachen die Teilnehmer vor Beginn des Zeitraums der Datenübertragung auf und übertragen ihre anstehenden Daten. Das heißt, die Funkschnittstelle wird nur für diesen Zeitraum aktiv geschaltet. Dabei muss das Zeitfenster, in welchem sich die Teilnehmer im wachen Zustand befinden, so eingestellt sein, dass alle beteiligten Kommunikationspartner in diesem Zeitraum auch tatsächlich kommunizieren können. Die Synchronisation der zeitlichen Lage des Übertragungszeitraums kann in der Wachphase der Teilnehmer durchgeführt werden. Damit ist gewährleistet, dass die Lage der Übertragungszeiträume nicht bei den verschiedenen Kommunikationspartnern auseinander läuft.

Insbesondere bei energieautarken Sensoren als Kommunikationspartner ist die Möglichkeit, die Kommunikationsaktivitäten auf bestimmte Zeiträume zu beschränken und damit den Energiebedarf zu minimieren, von großer Bedeutung. Dadurch ist es möglich, den Sensor mit einem kleineren Energiespeicher zu betreiben oder eine kleinere Energiequelle zu verwenden. Andererseits können Wartungsinterwalle, in welchen ein Energiespeicher ausgetauscht wird, bei gleicher Größe des Energiespeichers in längeren Abständen durchgeführt werden. Indem jeder Sensor seinen gewünschten Sendezyklus bekanntmacht, können sich Sensoren mit ähnlichen Sendezyklen als Kommunikationspartner finden und zu einer Masche verbinden. Die zu einer Masche verbundenen Sensoren können sich auf einen gemeinsamen Kommunikationszyklus einigen, der den Anforderungen des anspruchsvollsten Kommunikationspartners noch genügt. Unnötig häufige Kommunikation wird damit vermieden und Energie eingespart.

Bei mit Access-Points strukturierten Netzwerken ist es in vorteilhafter Weise möglich, die Anbindung der energieautarken Sensoren an die Access-Points zu optimieren. Da jeder Sensor seine Anforderungen bezüglich der Häufigkeit der Datenübertragung bekannt macht, ist die Kommunikation planbar und die Access-Points können die Last geeignet verteilen.

Wenn der erste Teilnehmer den weiteren Teilnehmern mitteilt, für welche Zeitdauer er zwischen zwei Datenübertragungen nicht an der Kommunikation teilnimmt, hat dies den Vorteil, dass er seine Kommunikationsschnittstelle zwischen zwei Datensendungen vollständig deaktivieren kann. Beispielsweise kann ein Access-Point anhand dieser Information entscheiden, ob Daten an einen mit ihm in Verbindung stehenden Sensor per Funk weitergeleitet werden oder so lange im Access-Point zwischengespeichert werden, bis der Sensor seine Kommunikationsschnittstelle erneut aktiviert hat.

Zudem kann der erste Teilnehmer weiteren Teilnehmern seine funktionelle Eigenschaft im Funknetzwerk mitteilen, ob er als Router betreibbar ist, und die Konfigurationseinrichtung kann in Abhängigkeit der mitgeteilten funktionellen Eigenschaft die Maschenstruktur eines vermaschten Funketzwerks bestimmen. Dadurch wird in vorteilhafter Weise ein automatischer Aufbau eines optimierten, vermaschten Funknetzwerks ermöglicht. Bei dieser Optimierung können selbstverständlich die von den Teilnehmern geforderte Datenrate und die mitgeteilten Anforderungen an die Häufigkeit der Datenübertragung mit berücksichtigt werden.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein vermaschtes Funknetzwerk,
- Figur 2: zwei Zeitdiagramme mit Kommunikationszyklen und
- Figur 3: ein Teilnehmergerät.

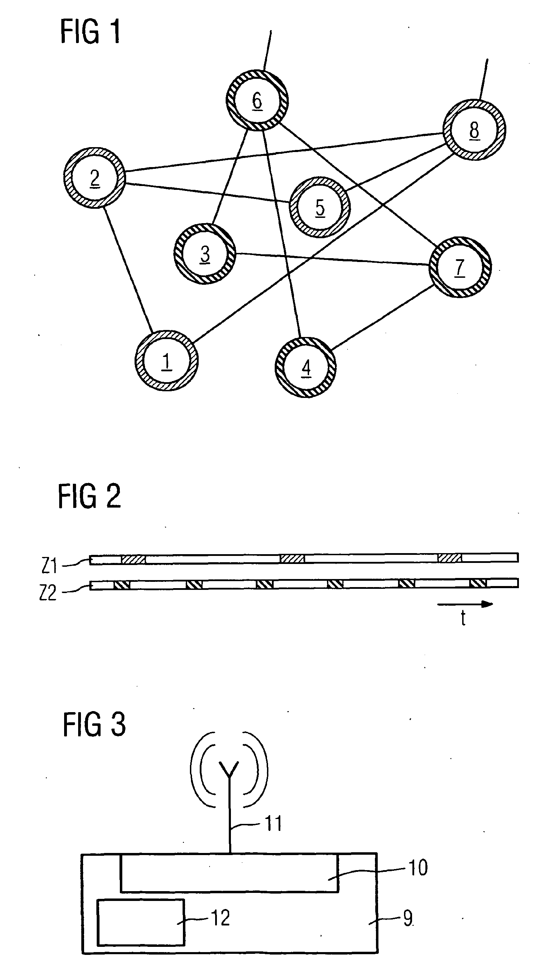

Ein beispielhaftes Funknetzwerk mit acht Teilnehmergeräten 1...8 ist in Figur 1 dargestellt. In einer Inbetriebnahmephase teilen die Teilnehmergeräte 1...8 jeweils durch Versenden von Telegrammen den jeweils anderen Teilnehmergeräten ihre Anforderungen an die Häufigkeit der Datenübertragung mit. Durch eine Konfigurationseinrichtung, die beispielsweise zentral im Teilnehmergerät 1 angeordnet sein kann, werden in einer Netzwerkoptimierung die Kommunikationspartner aus den Teilnehmergeräten 1...8 bestimmt, die bezüglich ihrer Anforderungen am besten zueinander passen. In dem in Figur 1 gezeigten, vermaschten Funknetzwerk erfolgt dies durch eine Gruppenbildung, in welcher verschiedene Teilnehmergeräte jeweils zu einem unabhängigen, vermaschten Netz zusammengeschlossen werden. Dies kann derart erfolgen, dass die Teilnehmer zeitlich nacheinander anlaufen. Jeder Teilnehmer verbreitet (Broadcast) seine Anforderungen/Funktionen, die im jeweiligen System möglich sind, auf allen Kanälen. Hierauf erhält er eine Antwort von allen zu diesem Zeitpunkt sichtbaren Stationen mit Information über deren Anforderungen/Möglichkeiten. Mit dieser Vorgehensweise ist sichergestellt, dass jeder stets seine Nachbarn und deren Anforderungen/Möglichkeiten kennt und somit eine optimale Struktur erstellt werden kann. Es bilden auf diese Weise die Teilnehmergeräte 1, 2, 5 und 8 ein erstes vermaschtes Netz und die Teilnehmergeräte 3, 4, 6 und 7 ein zweites vermaschtes Netz. In den beiden vermaschten Netzen des Funknetzwerks werden verschiedene Kanäle zur Kommunikation genutzt, so dass sich die beiden Netze nicht gegenseitig stören. In dem gezeigten Ausführungsbeispiel handelt es sich um ein Funknetzwerk mit autarken Sensoren als Teilnehmergeräte 1...8. In jedem vermaschten Netz ist daher ein Uplink-Knoten zum Anschluss des Netzes an ein überlagertes System, beispielsweise im Rahmen einer Steuerung eines technischen Prozesses, vorgesehen. Im ersten vermaschten Netz bildet das Teilnehmergerät 8 den Uplink-Knoten, im zweiten vermaschten Netz das Teilnehmergerät 6, wie es in der Zeichnung durch eine Verbindungslinie mit offenem Ende angedeutet ist. Die beiden Teilnehmergeräte 6 und 8 haben die Funktion von Uplink-Knoten erhalten, da sie den anderen Teilnehmergeräten mitgeteilt haben, dass sie die Fähigkeit besitzen, als Router in einem vermaschten Netz betrieben zu werden.

Bei der Konfiguration des Funknetzwerks können zudem weitere Anforderungen von Teilnehmergeräten, beispielsweise die Datenrate oder die Telegrammgröße, oder weitere funktionelle Eigenschaften, beispielsweise, ob es sich bei dem Teilnehmergerät um einen Endknoten oder einen Gateway-Knoten in einem Funknetzwerk handelt, berücksichtigt werden. Daraus ergeben sich weitere Optimierungsmöglichkeiten bei der Festlegung der Netzwerktopologie und Einstellung der Kommunikationsparameter.

Alternativ zum beschriebenen Ausführungsbeispiel kann die Konfigurationseinrichtung dezentral ausgeführt werden, so dass in jedem Teilnehmergerät 1...8 eine Konfigurationseinrichtung vorgesehen ist und die Teilnehmergeräte 1...8 entsprechend ihren jeweiligen Anforderungen an die Häufigkeit der Datenübertragung die zeitlichen Parameter von Kommunikationszyklen absprechen oder aushandeln.

Figur 2 zeigt als ein Ergebnis der Konfiguration des Netzwerks gemäß Figur 1 zeitliche Abläufe Z1 und Z2 von Kommunikationszyklen, die im ersten vermaschten Netz bzw. zweiten vermaschten Netz verwendet werden. Die Zeiträume der Datenübertragung sind jeweils mit schraffierten Flächen, die Abständen zwischen den Datenübertragungen mit weißen Feldern dargestellt. Da die Teilnehmergeräte 1, 2, 5 und 8 größere Abständen zwischen den einzelnen Datenübertragungszeiträumen zulassen, sind sie in der ersten Masche als Kommunikationspartner zusammengefasst, in welcher ein größerer Abstand zwischen den Datenübertragungszeiten besteht. In den Pausen zwischen zwei Datenübertragungen kann die Kommunikationsschnittstelle der Teilnehmer vollständig abgeschaltet werden. Dadurch ist eine erhebliche Energieeinsparung in den Teilnehmergeräten, insbesondere in autarken Sensoren als Geräte der Prozessinstrumentierung, möglich. In dem zweiten vermaschten Netz aus den Teilnehmergeräten 3, 4, 6 und 7 werden kürzere Abstände zwischen den Datenübertragungen gefordert. Infolgedessen folgen im Kommunikationszyklus Z2 die Zeiträume von Datenübertragungen in kürzeren zeitlichen Abständen aufeinander.

Figur 3 zeigt einen Teilnehmer 9 mit einer Funkschnittstelle 10, die eine Antenneneinrichtung 11 aufweist. Dabei handelt es sich vorzugsweise um einen autarken Sensor mit einer eigenen Energieversorgung, beispielsweise durch eine Batterie. Durch eine Konfigurationseinrichtung 12 des Teilnehmers 9 werden im Funknetzwerk, in welchem sich der Teilnehmer 9 befindet, die am besten passenden Kommunikationspartner aufgrund seiner Anforderungen an die Häufigkeit der Datenübertragung bestimmt. Sobald Verbindungen zu diesen Kommunikationspartnern aufgebaut und zeitliche Parameter der Kommunikation ausgehandelt sind, erfolgt die Datenübertragung in synchronisierten Kommunikationszyklen. In den Pausen zwischen der Datenübertragung wird die Funkschnittstelle 10 vollständig deaktiviert. Dadurch kommt das Teilnehmergerät 9 mit sehr geringer Energiemenge aus.

## Patentansprüche

1. Verfahren zum Betreiben eines Funknetzwerks zur Datenübertragung zwischen mehreren Teilnehmern (1...8), insbesondere zwischen Geräten der Prozessinstrumentierung in einer automatisierungstechnischen Anlage, **dadurch gekennzeichnet, dass** zumindest ein erster Teilnehmer (1) in einer Inbetriebnahmephase weiteren Teilnehmern (2...8) in einem Telegramm seine Anforderungen an die Häufigkeit der Datenübertragung mitteilt, dass eine Konfigurationseinrichtung (12) im Funknetzwerk in Abhängigkeit der Anforderungen aus den weiteren Teilnehmern (2...8) in einer Netzwerkoptimierung zumindest einen Kommunikationspartner (2 5, 8) bestimmt und dass zwischen dem ersten Teilnehmer (1) und dem bestimmten Kommunikationspartner (2, 5, 8) eine Verbindung mit aufeinander abgestimmter Häufigkeit der Datenübertragung aufgebaut wird.

2. Verfahren nach Anspruch 1, **dadurch gekennzeichnet, dass** der erste Teilnehmer weiteren Teilnehmern mitteilt, für welche Zeitdauer er zwischen zwei Datenübertragungen nicht an der Kommunikation teilnimmt.

3. Verfahren nach Anspruch 1 oder 2, **dadurch gekennzeichnet, dass** der erste Teilnehmer weiteren Teilnehmern seine funktionelle Eigenschaft im Funknetzwerk mitteilt, ob er als Router betreibbar ist, und dass die Konfigurationseinrichtung (12) im Funknetzwerk in Abhängigkeit der funktionellen Eigenschaft die Maschenstruktur des Funknetzwerks bestimmt.

4. Teilnehmergerät, insbesondere Messumformer für ein Funknetzwerk, das nach einem Verfahren gemäß einem der Ansprüche 1 bis 3 betreibbar ist, **dadurch gekennzeichnet, dass** das Teilnehmergerät (1) dazu ausgebildet ist, in einer Inbetriebnahmephase weiteren Teilnehmern (2...8) in einem Telegramm seine Anforderungen an die Häufigkeit der Datenübertragung mitzuteilen, so dass durch eine Konfigurationseinrichtung (12) im Funknetzwerk in Abhängigkeit der Anforderungen aus den weiteren Teilnehmern (2...8) in einer Netzwerkoptimierung zumindest ein Kommunikationspartner (2, 5, 8) bestimmbar ist, und dass das Teilnehmergerät (1) zu den bestimmten Kommunikationspartnern (2, 5, 8) eine Verbindung mit aufeinander abgestimmter Häufigkeit der Datenübertragung aufbaut.

## Claims

1. Method for operating a radio network for transmitting data between a number of subscribers (1 ... 8), in particular between process instrumentation devices in an automation system, **characterised in that** in a start-up phase at least one first subscriber (1) notifies further subscribers (2 ... 8) in a telegram of its requirements relating to data transmission frequency, during network optimisation a configuration facility (12) in the radio network determines at least one communication partner (2, 5, 8) as a function of the requirements from the further subscribers (2 ... 8) and a connection is set up between the first subscriber (1) and the determined communication partner (2, 5, 8) with a data transmission frequency tailored to each of them.

2. Method according to claim 1, **characterised in that** the first subscriber notifies further subscribers of the period for which it will not take part in communication between two data transmissions.

3. Method according to claim 1 or 2, **characterised in that** the first subscriber notifies further subscribers of its functional characteristic in the radio network determining whether it can be operated as a router and the configuration facility (12) in the radio network determines the mesh structure of the radio network as a function of the functional characteristic.

4. Subscriber device, in particular a measuring transducer for a radio network, which can be operated according to a method according to one of claims 1 to 3, **characterised in that** in a start-up phase the subscriber device (1) is configured to notify further subscribers (2 ... 8) in a telegram of its requirements relating to data transmission frequency, so that during network optimisation a configuration facility (12) in the radio network can determine at least one communication partner (2, 5, 8) as a function of the requirements from the further subscribers (2 ... 8) and the subscriber device (1) sets up a connection to the determined communication partners (2, 5, 8) with a data transmission frequency tailored to each of them.

## Revendications

1. Procédé pour faire fonctionner un réseau radio de transmission de données entre plusieurs participants ( 1...**. .**8), notamment entre des appareils de l'instrumentation de processus dans une installation en technique d'automatisation, **caractérisé en ce qu'**au moins un premier participant ( 1 ) fait part, dans une phase de mise en fonctionnement, à d'autres participants ( 2...**. .**8 ) dans un télégramme de ses exigences en matière de fréquence de la transmission des données, **en ce qu'**un dispositif ( 12 ) de configuration détermine dans le réseau radio, en fonction des exigences des autres participants ( 2......8 ), suivant une optimisation du réseau, au moins un partenaire ( 2, 5, 8 ) de communication et **en ce qu'**on établit entre le premier participant ( 1 ) et le partenaire ( 2, 5, 8 ) de communication déterminé une liaison ayant une fréquence de la transmission des données adaptée entre eux.

2. Procédé suivant la revendication 1, **caractérisé en ce que** le premier participant fait part à d'autres participants de la durée pendant laquelle il ne prend pas entre deux transmission de données part à la communication.

3. Procédé suivant la revendication 1 ou 2, **caractérisé en ce que** le premier participant fait part à d'autres participants de sa propriété fonctionnelle dans le réseau radio sur le point de savoir s'il peut fonctionner en routeur et **en ce que** le dispositif ( 12 ) de configuration détermine la structure maillée du réseau radio dans le réseau radio en fonction de la propriété fonctionnelle.

4. Appareil de participant, notamment transducteur de mesure pour un réseau radio, qui peut fonctionner suivant un procédé selon l'une des revendications 1 à 3, **caractérisé en ce que** l'appareil ( 1 ) de participant est constitué de façon à ce que, dans une phase de mise en fonctionnement, il peut faire part à d'autres participants ( 2... **.**8 ) dans un télégramme de ses exigences en matière de fréquence de la transmission des données de sorte que par un dispositif ( 12 ) de configuration il peut être déterminé au moins un partenaire ( 2, 5, 8 ) de communication dans le réseau de radio en fonction des exigences des autres participants ( 2... **.**8 ) suivant une optimisation du réseau et **en ce que** l'appareil ( 1 ) de participant crée avec les autres partenaires ( 2, 5, 8 ) de communication déterminés une liaison ayant une fréquence de la transmission de données adaptée entre eux.
